# EUROPEAN PATENT APPLICATION

(11) **EP 4 792 653 A1**
(43) Date of publication of application: **19.08.2026**
(21) Application number: 25382128.4
(22) Date of filing: 14.02.2025
(51) Int. Cl.: A23B 2/733, A23B 2/771, A23B 4/20, A23L 33/105

(54) **POLYPHENOL-RICH EXTRACT**

(71) Applicant: Productos Sur, S.L., 30169 San Ginés Murcia (ES)
(72) Inventor: HERNÁNDEZ CÁNOVAS, Juan de Dios, 30169 San Ginés (Murcia) (ES); GUILLÉN LÓPEZ, Isidro, 30169 San Ginés (Murcia) (ES)
(74) Representative: Temiño Ceniceros, Ignacio

(57) **Abstract**

The present invention related to a polyphenol-rich extract (PRE) comprising a blend of:
- extract from tea leaves and
- extract from bitter orange fruits.

## Description

Preservatives play a crucial role in maintaining the safety, quality, and shelf life of food products.

Prevention of Microbial Spoilage: Food is susceptible to contamination by bacteria, yeast, and molds, which can lead to spoilage and foodborne illnesses. Preservatives inhibit the growth of these microorganisms, ensuring food remains safe for consumption. Common antimicrobial preservatives include sodium benzoate, sorbic acid, and nitrites. These compounds disrupt microbial cell membranes, inhibit enzyme activity, or interfere with DNA replication, effectively preventing growth

Prevention of oxidation and Rancidity: food oxidation is a complex chemical process that primarily involves the degradation of lipids (fats) and proteins in meat, leading to undesirable changes in flavor, color, texture, and nutritional value. This process is a major cause of meat spoilage and is influenced by factors such as exposure to oxygen, light, heat, and the presence of pro-oxidants, antioxidant preservatives like vitamin E (tocopherols) and butylated hydroxytoluene (BHT) or vitamin C prevent oxidative damage.

The consumer and food industry now tend to choose natural products over synthetic ones and consequently, the food market is demanding natural antioxidants and preservatives, free of synthetic ingredients and still orientated to diminish the oxidation processes in food products and increase the self-life.

Polyphenols are natural antioxidants that can stabilize the heme group of myoglobin, maintaining the reddish color of meat products without the formation of nitrite-derived products such as N-nitrosamines. In addition, polyphenols have antimicrobial and antioxidant properties that make these compounds an alternative food ingredient to chemical antioxidants.

There are currently fewer patents regarding preservative reduction/replacement in meat products.

US 11071304 B2 discloses a method for preparing a curing agent comprising a plant-based nitrite derived from fermented plant material and claims that this curing agent is substantially free of non-natural nitrate and nitrite.

CN202211168407.6 discloses a method to elaborate low-nitrite residual low-salt dried meat slice, which mainly comprises the steps of inoculating staphylococcus and micrococcus bacteria after hot processing of meat product to decompose residual nitrite and nitrosamine in the final product. To achieve the effect of reducing the nitrite residue, this technology utilizes microbial fermentation to further reduce the nitrite of the processed product, but it is not clear an effect in the removal of toxic products derived from nitrite treatment.

CN202280043283.0 discloses nitrite substitutes containing natural components made from a mixture composed of buffered dry vinegar and extracts of red radish, rosemary and green tea in different proportions are described to control the growth of *Clostridium botulinum* and *Listeria monocytogenes.* The color and stability of final meat products were not considered.

CN118697027A discloses a method to elaborate a food ingredient for replacing nitrite in guang style sausage based on microcapsules containing green plum polyphenol and astaxanthin. The replacement of sodium nitrite with this new food ingredient allows obtaining the antioxidant effect and the color developed by sodium nitrite.

The application of approved synthetic antioxidants in food products such as ascorbic acid, BHA (butylhydroxyanisole), BHT (butylhydroxytoluene) or TBHQ (tert-butylhydroquinone) decreases lipid oxidation, preventing rancidity, but does not adequately maintain the color of these products in absence of nitrite.

In the case of meat, modified atmosphere retail packaging with a high level of oxygen (70-80%) is increasingly being used to replace the use of antioxidants and nitrites. However, no significant improvements have been detected regarding the control of meat color and an increase in lipid oxidation has been observed in meat and meat products, leading to rancidity.

Therefore, no alternatives have been found on the market to the technological properties developed by PRE as food ingredient to preserve food.

### Description of the invention

The present invention refers to a polyphenol-rich extract (PRE) comprising a blend of:
- extract from tea leaves and
- extract from bitter orange fruits.

The polyphenol-rich extract according to the invention comprises the polyphenols epigallocatechin, epicatechin, epigallocatechin gallate, epicatechin gallate and quercetin.

According to particular embodiments, the polyphenols epigallocatechin, epicatechin, epigallocatechin gallate, epicatechin gallate and quercetin are present in the following amounts:
- epigallocatechin: between 50.0 g/kg and 55.0 g/kg
- epicatechin: between 18.0 g/kg and 21.0 g/kg
- epigallocatechin gallate: between 40.0 g/kg and 70.0 g/kg
- epicatechin gallate between 44.0 g/kg and 49.0 g/kg
- quercetin: between 105 g/kg and 115 g/kg
wherein the amounts refer to the total weight of the polyphenol-rich extract.

According to additional particular embodiments the polyphenol-rich extract comprises a total content of polyphenols not less than 55 % (w/w) with regard to the total weight of the polyphenol-rich extract, being the value 55% (w/w) included.

According to preferred embodiments, the polyphenol-rich extract comprises the polyphenols epigallocatechin, epicatechin, epigallocatechin gallate, epicatechin gallate and quercetin are present in the amounts:
- epigallocatechin: between 50.0 g/kg and 55.0 g/kg
- epicatechin: between 18.0 g/kg and 21.0 g/kg
- epigallocatechin gallate: between 40.0 g/kg and 70.0 g/kg
- epicatechin gallate between 44.0 g/kg and 49.0 g/kg
- quercetin: between 105 g/kg and 115 g/kg
wherein the amounts refer to the total weight of the polyphenol-rich extract and the total content of polyphenols is not less than 55 % (w/w) with regard to the total weight of the polyphenol-rich extract.

The polyphenol-rich extract is a solid product.

In the polyphenol-rich extract, the tea leaves pertain to the species *Camellia sinensis.*

According to additional particular embodiments in the polyphenol-rich extract the bitter orange fruits pertain to *Citrus spp.,* particularly to the species *Citrus aurantium*

The present invention also refers to a composition comprising the polyphenol-rich extract defined hereinabove.

The present invention also refers to a process for obtaining the polyphenol-rich extract defined hereinabove, the process comprising:
- preparing tea leaves extract,
- preparing bitter orange fruits extract
- mixing the obtained dry extracts.

The extracts are dry before being mixed in the final step, and they are preferably dried.

The process can further comprise drying the obtained the polyphenol-rich extract.

According to particular embodiments, the tea leaves from *Camellia sinensis* are subjected to the following operations:
- extracted with hot water,
- optionally debittered,
- the caffeine is eliminated with an exchange resin,
- concentrated and
- finally dried by spray drying to obtain a powder.

According to more particular embodiments, in the process of the invention the tea leaves from *Camellia sinensis* are subjected to the following sequential operations:
- extracted with hot water, at a temperature between 65°C - 84°C, preferably, between 70-80°C,
- maintaining the leaves a period between 25 and 45 minutes in water, preferably, between 30-40 minutes
- optionally, the obtained infusion is debittered, in case of need,
- the caffeine of the product of the previous step is eliminated with an exchange resin, preferably with a cationic exchange resin, and more preferably with a cationic exchange resin of polystyrene- divinylbenzene with sulphonate (SO₃⁻) functional groups,
- concentrating the product obtained in the preceding step, for example, by evaporating the solvent at an evaporation temperature between 57°C - 74°C, preferably, between 60-70°C to avoid degradation of heat sensitive compounds; the concentration is carried out under low vacuum to low the boiling point of water; the concentration time is variable, for example it can range between 1-5 hours, particularly between 2-4 hours, and
- the obtained product is finally dried by spray drying to obtain a powder.

The powder during the spray drying can be atomized by means of a nozzle or a rotatory disc.

The size of the drops is generally between 10-200 µm; the temperature or the air at the entrance is comprised between 150-300°C; the temperature or the air at the outlet comprised between 60-100°C.

The powder obtained is a fine green powder.

The temperature and time of each operation are controlled during the process.

The water used for the process can be any type of clean water, preferably, decalcified water, with a hardness equal or below 10 °F.

According to particular embodiments, preparing bitter orange fruits extract comprises:
- extracting immature fruits of the bitter orange tree (*Citrus aurantium*) with a mix of water and ethanol, in a proportion water/ethanol between 60:40 and 75:25, preferably 70:30 in volume
- filtrating,
- evaporating the solvent,
- spray drying and
- sieving to obtain a powder, that is a fine yellow powder.

According to particular embodiments, in the process of the invention, the bitter orange fruits extract is obtained by means of the following sequential operations:
- extracting immature fruits of the bitter orange tree (*Citrus aurantium*) with a mix of water and ethanol, in a proportion water/ethanol between 60:40 and 75:25, preferably 70:30 volume; the ratio solid-liquid is about 1:10, this is, 1 part of oranges and 10 parts of solvent, to guarantee an efficient extraction; the temperature during the extraction can be between 47-63°C, preferably, between 50 - 60°C; the extraction time is variable, for example, between 30 and 60 minutes;
- filtrating,
- evaporating the solvent, in the same manner as it was explained for the extraction of the tea leaves above,
- spray drying, in the same manner as it was explained for the extraction of the tea leaves above,
- sieving to obtain a powder, that is a fine yellow powder.

According to particular embodiments of the process, each plant extract is standardized separately, for example, by using a diluent such as maltodextrin, dextrose, dextrin, starch, preferably with maltodextrin and more preferably, with carrier corn maltodextrin obtaining a total content of polyphenols not less than 55 % (w/w) and a range of the main polyphenols of:
- epigallocatechin: between 50.0 g/kg and 55.0 g/kg
- epicatechin: between 18.0 g/kg and 21.0 g/kg
- epigallocatechin gallate: between 40.0 g/kg and 70.0 g/kg
- epicatechin gallate between 44.0 g/kg and 49.0 g/kg
- quercetin: between 105 g/kg and 115 g/kg.

The tea extract is standardized according to the following ratio (by weight):
Tea extract: between 45-55%, preferably, between 48-53%, and specially preferred 50%
Corn Maltodextrin: between 45-55%, preferably, between 48-53%, and specially preferred 50%

The orange extract is standardized according to the following ratio (by weight):
Orange extract: between 35-45%, preferably, between 38-43%, and specially preferred 30%
Corn Maltodextrin: between 45-55%, preferably, between 48-53%, and specially preferred 50%

Both plant extracts are mixed according to the following ratio (by weight):
Standardized tea extract: between 40 % and 50%, preferably, between 42 and 46% and particularly preferred 44%
Standardized orange extract: between 40 % and 60%, preferably, between 52 and 58% and particularly preferred 56%

According to particular embodiments, the PRE contains the following ratios (by weight):
Tea Extract:_between 20 and 28,0 %
Orange Extract: between 37 and 43%
Corn Maltodextrin: between 35 and 45 %.

According to a preferred embodiment, the PRE contains the following ratios:

| | |
|---|---|
| Tea Extract | 22,0% |
| Orange Extract | 39,2% |
| Corn Maltodextrin | 38,8%. |

The present invention also refers to a polyphenol-rich extract obtained by the process defined hereinabove.

The present invention also refers to the use of the polyphenol-rich extract defined hereinabove, or to a composition comprising the polyphenol-rich extract, to preserve a food product.

The terms preserving, preserve ( d ), curing , and cure ( d ), as they relate to the invention described herein, mean any improvement in the amount of time that a food product treated with the antioxidant ingredient can be safely stored ( e.g. , shelf - life ), or remains sensory, organoleptic, or color acceptable, when compared with food products that have not been cooked, cured , preserved , or treated with any shelf-life extending agent , such as salt or smoke.

The antioxidant ingredient, polyphenol-rich extract, of the present invention can be used to preserve any food product.

The use of the polyphenol-rich extract comprises mixing the food product with the polyphenol-rich extract.

Polyphenol-rich extract (PRE) is a food ingredient obtained as a blend of *Camellia sinensis* leaf extract and *Citrus spp.,* particularly *Citrus aurantium,* fruits extract manufactured in dry format.

This food ingredient has been designed as a natural antioxidant to replace the use of chemical food ingredients such as synthetic antioxidants, nitrates (E249/E250), nitrites (E251/E250) or vegetal sources of nitrites such as fermented vegetable juices. In addition, the food ingredient PRE is suitable for its application in all the food product categories.

The polyphenol-rich extract (PRE) can replace the addition of synthetic antioxidants, nitrate and nitrite, both in its chemical form and in the form of fermented vegetable juice, as a food ingredient for the preservation food products. In the absence of added nitrite and nitrate, the formation of N-nitroso compounds is reduced while technological properties such as color and antioxidant effect are developed by the polyphenols present in PRE. Therefore, food products elaborated with PRE can be labeled as Nitrite-free.

### Brief description of figures

Figure 1. Overall composition of PRE expressed as percentage of the total weight (% (w/w)). In the figure the sections correspond to:
60 % polyphenolic compounds
22 % carbohydrate content
6 % moisture
1 % protein
11 % dietary fibre

Figure 2. Sliced cooked ham samples on day 0.

Figure 3. Color a*/b* values of restructured ham during storage at 1.5-3 °C (top: light; bottom: dark). Error bars represent Tukey-Kramer 95% confidence intervals. S.E.M. (standard error of mean) = 0.0395.

### EXAMPLES

### EXAMPLE 1

This example illustrates the effect of Polyphenol-rich extract (PRE) on the color preservation of cooked ham.

Seven treatments of restructured ham were manufactured and transferred under refrigerated conditions to the analytical laboratory, where they were stored under refrigeration in total darkness and under LED lights (to simulate retail display) for 90 days and analyzed at different time points during the storage period. The treatments were formulated with 1, 5, 40, 100, 150, or 200 ppm of polyphenol rich extract (PRE) (calculated on a meat basis) this was compared with a treatment with sodium ascorbate and nitrite (T-NAT). The experimental treatments were designated as T-1, T-5, T-40, T-100, T-150, T-200, respectively. An untreated control (designated as "Control") without addition of sodium ascorbate, nitrite or PRE was also manufactured, stored, and analyzed in the same manner as the experimental treatments.

Brine ingredients were weighed in the amounts shown in Table 1. Sodium phosphate was slowly added to 2 °C distilled water under constant high shear mixing at 11,000 rpm with a Fisherbrand 850 Homogenizer. For treatment T-NAT and PRE were then added and mixing continued for an additional 15 s. Preparation of all brines was completed 3 min before addition to the meat.

The figures in each of the columns are the percentage of final product with respect to the initial amount (w/w)

**Table 1. Restructured ham formulations (values expressed in percent)**

| | Control | T-1 | T-5 | T-40 | T-100 | T-150 | T-200 | T-NAT |
|---|---|---|---|---|---|---|---|---|
| Pork ham insides | 90.00 | 90.00 | 90.00 | 90.00 | 90.00 | 90.00 | 90.00 | 90.00 |
| Sodium | 1.50 | 1.50 | 1.50 | 1.50 | 1.50 | 1.50 | 1.50 | 1.50 |
| chloride | | | | | | | | |
| Sodium phosphates | 0.50 | 0.50 | 0.50 | 0.50 | 0.50 | 0.50 | 0.50 | 0.50 |
| Sodium nitrite | - | - | - | - | - | - | - | 0.010 |
| Sodium | - | - | - | - | - | - | - | 0.05 |
| Ascorbate | | | | | | | | |
| PRE | - | 0,0001 | 0,0005 | 0,004 | 0,010 | 0,015 | 0,02 | - |
| Distilled water | 8.00 | 8.00 | 8.00 | 8.00 | 7.98 | 7.98 | 7.97 | 7.94 |

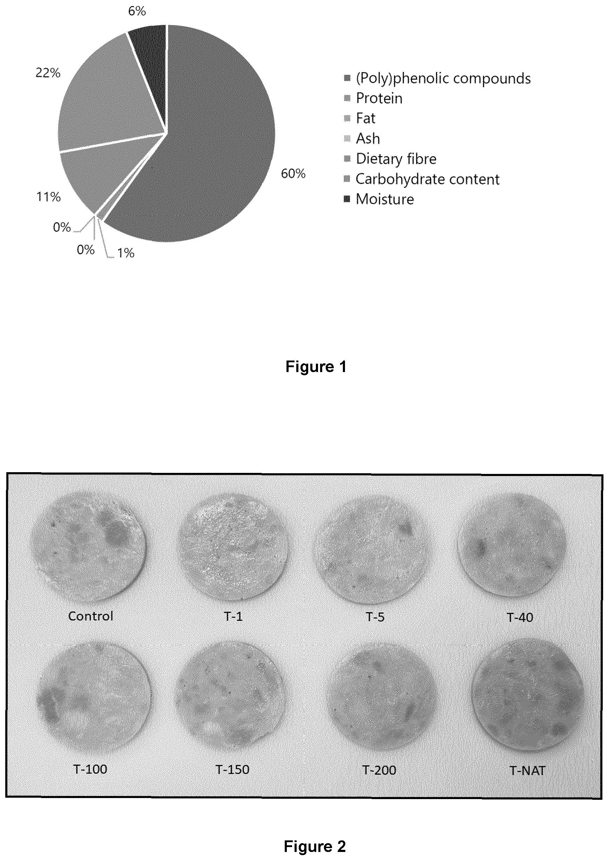

The brine corresponding to each treatment was then added to the meat and after vacuum-tumbling at 6 rpm for 2 h, raw ham batters were vacuum stuffed in 40-mm-day impermeable plastic casings and cooked in a single-truck oven at 82 °C/100% RH to an internal temperature of 71.1 °C. After chilling at 2 °C for 15-16 h, casings were stripped and ham logs sliced to a thickness of 2 mm. Ham slices were then selected randomly and placed inside 15-cm-wide high-barrier PA/EVOH/PE (polyamide (PA), ethylene vinyl alcohol (EVOH), polyethlene (PE)) pouches (clear front, black back; 0.1016 mm film thickness; Winpak Ltd., Winnipeg, MB, Canada) positioned side-by-side in a 2 x 3 arrangement (6 slices per package; Fig. 2), vacuum-packaged and stored at 1.5-3 °C. Day of packaging was designated as day 0.

On the same day of slicing and packaging (day 0), samples from all treatments stored in a walk-in cooler at 1.5-3°C, either in the dark or under LED lights. Dark-stored samples were placed inside black plastic bags, which were then placed inside covered cardboard boxes. Light-stored samples were placed side-by-side, clear side-up, in one of four 121 cm x 46 cm wire racks, each equipped with two 122-cm 4100K/4000 lumens T8 LED bulbs suspended 25 cm above the sample surface. Each of the 4 racks contained every treatment from every replication, for a total of 24 packages (8 treatments x 3 replications), with packages grouped by replication. Package order within each group was random, and groups within each rack were placed on the rack randomly and rotated approximately every 2 weeks. The lights were connected to and controlled by a digital timer programmed to be ON for 16 h and OFF for 8 h.

Refrigerated samples were scanned on days 0, 5, 10, 15, 30, 45, 60, 75 and 90 post-packaging, with a HunterLab MiniScan EZ colorimeter using the CIE L*a*b* color space, illuminant D65, 10° observer, and a 31.75- mm aperture. From the values obtained (L*, a*, b*), a*/b* values were calculated for each treatment.

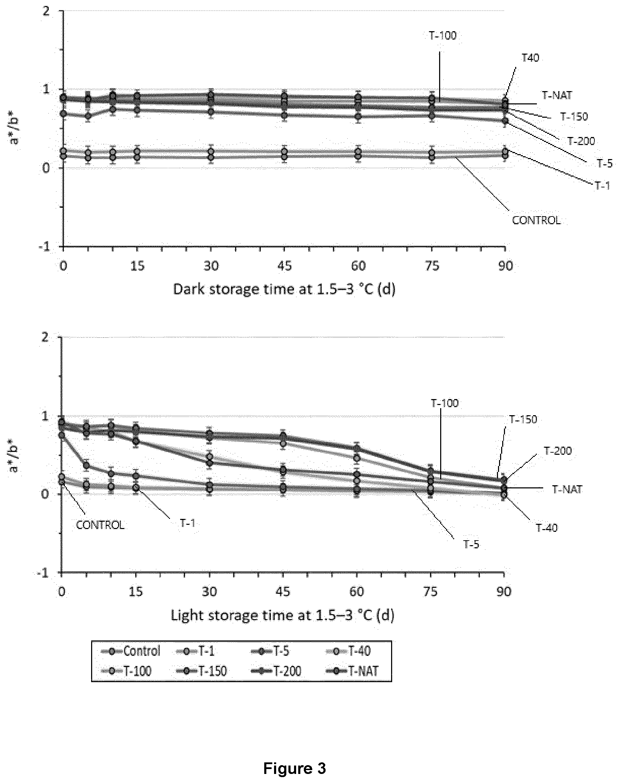

The results obtained from the a*/b* ratio, which indicate more redness and less discoloration, and show equivalent values after treatment of cooked hams with PRE or nitrites (time 0) (Fig 3). In addition, no discoloration occurs in cooked hams treated with PRE after keeping them in the dark for 90 days, while discoloration when exposed to light is less than in the case of cooked hams treated with nitrites (Fig 3).

### EXAMPLE 2

This example illustrates the antioxidant effect of polyphenol-rich extract (PRE) on cooked ham.

The antioxidant capacity of cooked hams prepared as described in EXAMPLE 1, with 120 ppm of nitrites or 0.3%(w/w) of PRE was determined by means of two assays (FRAP and DPPH). The capacity to reduce lipid oxidation in cooked hams after exposure to air for 4 days at 4°C was determined by the TBARS assay.

**Table 2. Results of assays carried out to determine the antioxidant capacity of cooked hams.**

| | Nitrite | PRE |
|---|---|---|
| FRAP assay (mmol Fe⁺² / 100 g cooked ham) | 1.22±0.27 | 6.63±0.61 |
| DPPH assay (mmol trolox eq /100 g cooked ham) | 0.05±0.01 | 0.31±0.05 |
| TBARS assay (MDA eq mmol/100g cooked ham) ^{§} | 2.32±1.43 | 0.54±0.25 |

| | | |
|---|---|---|
| § After air-exposed for 4 days at 4°C. MDA. Malondialdehyde | | |

The results described in table 2 show a clear increase in antioxidant effect developed by PRE ingredient compared to nitrite. Moreover, the levels of lipid oxidation measured as MDA equivalents were reduced in presence of PRE compared to nitrite treatment.

### EXAMPLE 3

This example illustrates the absence of nitrosyl-heme complex, a marker of nitrite treatment, after applied polyphenol-rich extract (PRE) during the elaboration of cooked ham.

The presence of nitrosyl-heme was determined in cooked hams manufactured as described in EXAMPLE 1, with 120 ppm of nitrites or 0.3%(w/w) of PRE by the measurement of nitrous oxide (N₂O) released, which is formed as the final product of acidic treatment of the meat, by headspace-gas chromatography/mass spectrometry (GC/MS).

The results described in table 3 show absence of nitrosyl-heme in the cooked ham elaborated with PRE ingredient while this compound is present in the cooked hams manufactured with nitrites.

**Table 3. Determination of nitrosyl-heme in cooked hams.**

| | Nitrite | PRE |
|---|---|---|
| Nitrosyl-heme (N₂O (mg/kg cooked ham) | 41.84±19.24 ppm | N.D. |

| | | |
|---|---|---|
| N.D.: No detected. | | |

## Claims

1. A polyphenol-rich extract (PRE) comprising a blend of:
- extract from tea leaves and
- extract from bitter orange fruits.

2. A polyphenol-rich extract according to claim 1, comprising the polyphenols epigallocatechin, epicatechin, epigallocatechin gallate, epicatechin gallate and quercetin.

3. A polyphenol-rich extract according to claim 2, wherein the polyphenols epigallocatechin, epicatechin, epigallocatechin gallate, epicatechin gallate and quercetin are present in the amounts:
• epigallocatechin: between 50.0 g/kg and 55.0 g/kg
• epicatechin: between 18.0 g/kg and 21.0 g/kg
• epigallocatechin gallate: between 40.0 g/kg and 70.0 g/kg
• epicatechin gallate between 44.0 g/kg and 49.0 g/kg
• quercetin: between 105 g/kg and 115 g/kg
wherein the amounts refer to the total weight of the polyphenol-rich extract.

4. A polyphenol-rich extract according to any one of the preceding claims that comprises a total content of polyphenols not less than 55 % (w/w) with regard to the total weight of the polyphenol-rich extract, this value included.

5. A polyphenol-rich extract according to claim 2 or 3, wherein the polyphenols epigallocatechin, epicatechin, epigallocatechin gallate, epicatechin gallate and quercetin are present in the amounts:
• epigallocatechin: between 50.0 g/kg and 55.0 g/kg
• epicatechin: between 18.0 g/kg and 21.0 g/kg
• epigallocatechin gallate: between 40.0 g/kg and 70.0 g/kg
• epicatechin gallate between 44.0 g/kg and 49.0 g/kg
• quercetin: between 105 g/kg and 115 g/kg.
wherein the amounts refer to the total weight of the polyphenol-rich extract and the total content of polyphenols is not less than 55 % (w/w) with regard to the total weight of the polyphenol-rich extract.

6. A polyphenol-rich extract according to any one of the preceding claims, which is a solid product.

7. A polyphenol-rich extract according to any one of the preceding claims, wherein the tea leaves pertain to the species *Camellia sinensis.*

8. A polyphenol-rich extract according to any one of the preceding claims, wherein the bitter orange fruits pertain to the species *Citrus aurantium*

9. A process for obtaining the polyphenol-rich extract defined in any one of the preceding claims, the process comprising:
- preparing tea leaves extract,
- preparing bitter orange fruits extract
mixing the obtained dry extracts.

10. A process according to claim 9, further comprising drying the obtained the polyphenol-rich extract.

11. A process according to claim 9, wherein tea leaves from *Camellia sinensis* are:
- extracted with hot water,
- optionally debittered,
- the caffeine is eliminated with an exchange resin,
- concentrated and
- finally dried by spray drying to obtain a powder.

12. A process according to claim 9, wherein preparing bitter orange fruits extract comprises:
- extracting immature fruits of the bitter orange tree (*Citrus aurantium*) with a mix of ethanol and water,
- filtrating,
- evaporating the solvent,
- spray drying and
- sieving to obtain a fine yellow powder.

13. A process according to claim 9, wherein each plant extract is standardized separately with carrier corn maltodextrin obtaining a total content of polyphenols not less than 55 % (w/w) and a range of the main polyphenols of:
• epigallocatechin: between 50.0 g/kg and 55.0 g/kg
• epicatechin: between 18.0 g/kg and 21.0 g/kg
• epigallocatechin gallate: between 40.0 g/kg and 70.0 g/kg
• epicatechin gallate between 44.0 g/kg and 49.0 g/kg
• quercetin: between 105 g/kg and 115 g/kg.

14. Use of the polyphenol-rich extract defined in any one of the preceding claims 1 to 8, to preserve a food product.

15. Use according to claim 14, comprising contacting the food product with the polyphenol-rich extract.

## Amended claims

### Amended claims in accordance with Rule 137(2) EPC.

1. A polyphenol-rich extract (PRE) comprising a blend of:
- extract from tea leaves and
- extract from bitter orange fruits,
the extract comprising the polyphenols epigallocatechin, epicatechin, epigallocatechin gallate, epicatechin gallate and quercetin; in the amounts:
• epigallocatechin: between 50.0 g/kg and 55.0 g/kg
• epicatechin: between 18.0 g/kg and 21.0 g/kg
• epigallocatechin gallate: between 40.0 g/kg and 70.0 g/kg
• epicatechin gallate between 44.0 g/kg and 49.0 g/kg
• quercetin: between 105 g/kg and 115 g/kg
wherein the amounts refer to the total weight of the polyphenol-rich extract.

2. A polyphenol-rich extract according to claim 1, that comprises a total content of polyphenols not less than 55 % (w/w) with regard to the total weight of the polyphenol-rich extract, this value included.

3. A polyphenol-rich extract according to claim 2, wherein the polyphenols epigallocatechin, epicatechin, epigallocatechin gallate, epicatechin gallate and quercetin are present in the amounts:
• epigallocatechin: between 50.0 g/kg and 55.0 g/kg
• epicatechin: between 18.0 g/kg and 21.0 g/kg
• epigallocatechin gallate: between 40.0 g/kg and 70.0 g/kg
• epicatechin gallate between 44.0 g/kg and 49.0 g/kg
• quercetin: between 105 g/kg and 115 g/kg,
wherein the amounts refer to the total weight of the polyphenol-rich extract and the total content of polyphenols is not less than 55 % (w/w) with regard to the total weight of the polyphenol-rich extract.

4. A polyphenol-rich extract according to any one of the preceding claims, which is a solid product.

5. A polyphenol-rich extract according to any one of the preceding claims, wherein the tea leaves pertain to the species *Camellia sinensis.*

6. A polyphenol-rich extract according to any one of the preceding claims, wherein the bitter orange fruits pertain to the species *Citrus aurantium*

7. A process for obtaining the polyphenol-rich extract defined in any one of the preceding claims, the process comprising:
- preparing tea leaves extract,
- preparing bitter orange fruits extract
mixing the obtained dry extracts.

8. A process according to claim 7, further comprising drying the obtained the polyphenol-rich extract.

9. A process according to claim 7, wherein tea leaves from *Camellia sinensis* are:
- extracted with hot water,
- optionally debittered,
- the caffeine is eliminated with an exchange resin,
- concentrated and
- finally dried by spray drying to obtain a powder.

10. A process according to claim 7, wherein preparing bitter orange fruits extract comprises:
- extracting immature fruits of the bitter orange tree (*Citrus aurantium*) with a mix of ethanol and water,
- filtrating,
- evaporating the solvent,
- spray drying and
- sieving to obtain a fine yellow powder.

11. A process according to claim 7, wherein each plant extract is standardized separately with carrier corn maltodextrin obtaining a total content of polyphenols not less than 55 % (w/w) and a range of the main polyphenols of:
• epigallocatechin: between 50.0 g/kg and 55.0 g/kg
• epicatechin: between 18.0 g/kg and 21.0 g/kg
• epigallocatechin gallate: between 40.0 g/kg and 70.0 g/kg
• epicatechin gallate between 44.0 g/kg and 49.0 g/kg
• quercetin: between 105 g/kg and 115 g/kg.

12. Use of the polyphenol-rich extract defined in any one of the preceding claims 1 to 6, to preserve a food product.

13. Use according to claim 12, comprising contacting the food product with the polyphenol-rich extract.
